# FASCICULE DE BREVET EUROPEEN

(11) **EP 2 715 260 B1**
(45) Date de publication et mention de la délivrance du brevet: **19.08.2020**
(21) Numéro de dépôt: 12731086.0
(22) Date de dépôt: 29.05.2012
(51) Int. Cl.: F25J 3/02, F25J 3/04, B01D 53/00, B01D 53/62

(54) **APPAREIL ET PROCÉDÉ INTÉGRÉ DE SÉPARATION D'UN MÉLANGE DE DIOXYDE DE CARBONE ET AU MOINS UN AUTRE GAZ ET DE SÉPARATION D'AIR PAR DISTILLATION CRYOGÉNIQUE**
VORRICHTUNG UND INTEGRIERTES VERFAHREN ZUM TRENNEN EINES GEMISCHES AUS KOHLENDIOXID UND MINDESTENS EINEM ANDEREN GAS SOWIE ZUR TRENNUNG VON LUFT DURCH KRYOGENE DESTILLATION
APPARATUS AND INTEGRATED PROCESS FOR SEPARATING A MIXTURE OF CARBON DIOXIDE AND AT LEAST ONE OTHER GAS AND FOR SEPARATING AIR BY CRYOGENIC DISTILLATION

(30) Priorité: 31.05.2011 FR 1154754
(43) Date de publication de la demande: 09.04.2014
(73) Titulaire: L'Air Liquide Société Anonyme pour l'Etude et l'Exploitation des Procédés Georges Claude, 75007 Paris (FR)
(72) Inventeur: COGNARD, Marie, F-91430 Igny (FR); DARDE, Arthur, F-75005 Paris (FR); DAVIDIAN, Benoit, F-94100 Saint Maur Des Fosses (FR); DUBETTIER-GRENIER, Richard, F-94210 La Varenne Saint Hilaire (FR); LOCKWOOD, Frederick, F-75010 Paris (FR); SZAMLEWSKI, Christophe, F-77380 Combs La Ville (FR); TRAVERSAC, Xavier, F-75012 Paris (FR)
(74) Mandataire: Mercey, Fiona Susan
(86) Numéro de dépôt international: PCT/FR2012/051203
(87) Numéro de publication internationale: WO 2012/164220

(56) Documents cités:
- EP-A1- 0 503 910
- EP-A1- 0 654 643
- EP-A1- 1 712 858
- WO-A1-2010/070226
- SAULNIER B: "ALTERNATIVES A L'UTILISATION DES GROUPES FRIGORIFIQUES A COMPRESSION POUR LA SEPARATION ET LA LIQUEFACTION DES GAZ DE L'AIR", REVUE GENERALE DU FROID, REVUE PRATIQUE DU FROID. PARIS, FR, 1 juillet 1993 (1993-07-01), pages 39-43, XP009034857, ISSN: 0755-7868

## Description

La présente invention est relative à un appareil et à un procédé intégré de séparation d'un mélange de dioxyde de carbone et au moins un autre gaz et de séparation d'air par distillation cryogénique.

Il concerne en particulier un appareil et un procédé intégré de séparation d'un mélange de dioxyde de carbone et au moins un autre gaz et de séparation d'air par distillation cryogénique, avec refroidissement d'eau destinée à refroidir le mélange et/ou l'air en amont de la séparation.

Les appareils de compression et de purification traitant des alimentations riches en CO₂ (plus de 35% volume en base sèche, préférentiellement plus de 70%) produisent par essence un flux plus pauvre en CO₂ que l'alimentation et contenant les gaz que l'on aura extraits du produit. La purification du CO₂ pourra avoir lieu grâce à une ou des condensation(s) partielle(s) ou par séparation membranaire ou tout autre procédé (adsorption, cryo-condensation, etc.). Dans certains procédés tels que ceux cités, le flux de gaz impur est produit sec. Ce ne sera pas le cas pour une séparation par lavage aux amines par exemple, où les deux produits de la séparation (le CO₂ et les gaz résiduels) seront humides.

La plupart des unités de traitement du CO₂ comprennent une étape de séchage des gaz traités. Il peut s'agir d'un séchage par adsorption. Il faut alors utiliser un gaz sec pour régénérer l'adsorbant lorsqu'il est saturé en eau. L'état de l'art prévoit ainsi d'utiliser les gaz vaporisés des stockages de CO₂ ou les gaz résiduels, à haute ou basse pression.

La présente invention propose, selon certaines variantes, une autre utilisation des gaz résiduels secs. On peut ainsi les saturer en eau dans une tour à contact direct, permettant ainsi d'abaisser la température de l'eau non évaporée et produire de l'eau réfrigérée. La méthode est couramment utilisée sur les appareils de séparation d'air dans les « tours eau-azote » pour refroidir l'eau par échange de chaleur et évaporation avec de l'azote froid provenant de l'appareil de séparation d'air.

Il est connu de EP-A-1712858 d'utiliser un gaz appauvri en dioxyde de carbone pour refroidir de l'eau dans une tour de refroidissement d'eau.

EP-A-0503190 décrit un système de refroidissement à l'eau pour un appareil de séparation d'un mélange de dioxyde de carbone, d'oxygène et d'azote dans lequel une tour de refroidissement d'eau est alimenté par de l'azote détendu provenant d'un appareil de séparation d'air et de l'eau, l'eau refroidie servant ensuite à refroidir le mélange à séparer. Avant d'être envoyé à la tour, l'azote est envoyé au condenseur de tête d'une colonne de distillation et ensuite à l'échangeur de refroidissement du mélange à séparer. Cette disposition compliquée requiert la présence d'une turbine pour que l'azote ait suffisamment de frigories pour apporter le froid requis. Rien ne permet de penser que ce froid serait suffisant pour refroidir à la fois l'eau pour l'appareil de séparation du mélange et l'appareil de séparation d'air.

Pour le cas où les incondensables présentent un débit relatif au débit total traité nettement plus faible que l'azote par rapport à l'air, une première partie du refroidissement de l'eau pourrait être réalisée dans une tour « eau-incondensables », la première partie du refroidissement étant complétée par une deuxième partie de refroidissement dans un groupe frigorifique.

Lorsqu'un appareil de séparation d'air ayant une tour de refroidissement à l'eau se trouve à proximité d'un appareil de séparation d'un mélange de dioxyde de carbone et au moins un autre gaz, utiliser la tour eau-azote pour produire de l'eau froide pour les deux appareils et éventuellement y saturer aussi les incondensables (qui partageront alors la mise à l'air de l'azote) permettra des gains réels en investissement par rapport à l'utilisation de deux tours indépendantes.

Il faudra veiller à éviter à tout prix que le CO₂ contenu dans les incondensables ne puisse pas remonter vers l'appareil de séparation d'air via la ligne de transfert de l'azote sec vers la tour eau-azote. En marche normale comme en cas de mode dégradé, le risque est réel d'introduire du CO₂ dans l'appareil de séparation d'air et de le boucher lorsque le CO₂ aura gelé.

On peut ainsi envisager d'introduire le CO₂ à un deuxième niveau dans la tour, au-dessus de l'azote.

Notons que le risque est cependant similaire à celui de faire rentrer de l'humidité dans la boite froide de l'appareil de séparation d'air, au détail près que les incondensables arrivent sous pression alors que lorsque l'azote est devenu humide, il a nécessairement une pression plus faible que celle qu'il avait dans la boite puisqu'il en vient.

Une mesure de précaution, qui est revendiquée comme inventive aussi, consiste à détendre les incondensables suffisamment loin de la tour pour que sur une distance qui sera jugée raisonnable, la pression régnant dans le tuyau d'alimentation de la tour soit plus faible pour la ligne des incondensables que pour la ligne de l'azote.

Selon un variante particulièrement simple, le procédé consiste à refroidir de l'eau en utilisant de l'azote d'un ASU et éventuellement au moins un gaz provenant d'une unité de séparation d'un mélange de CO₂ et d'au moins un autre gaz, pouvant être par exemple de l'azote, de l'oxygène, de l'argon, du monoxyde de carbone, de l'hydrogène, du méthane, de l'NO₂ ou un mélange d'au moins deux de ces gaz.

Selon un objet de l'invention il est prévu un appareil intégré selon la revendication 1.

Selon d'autres aspects facultatifs:
- les moyens pour refroidir l'air en amont de l'unité de séparation d'air sont constitués par une tour de lavage à l'eau et une conduite pour envoyer de l'eau réchauffée de la tour de lavage à la tour de refroidissement d'eau ;
- la conduite d'eau refroidie est adaptée pour envoyer de l'eau refroidie de la tour à l'unité de séparation du mélange pour fournir des frigories au mélange gazeux à séparer et/ou à un produit de la séparation ;
- l'appareil intégré comprend une unité d'oxycombustion, une conduite pour envoyer de l'oxygène d'une ou de l'unité de séparation d'air à l'unité d'oxycombustion et une conduite pour envoyer des fumées de l'oxycombustion à l'unité de séparation d'un mélange comme mélange gazeux ;
- l'appareil comprend une conduite pour envoyer le gaz appauvri en dioxyde de carbone à la tour de refroidissement d'eau et dans lequel éventuellement le niveau d'introduction du débit gazeux enrichi en azote est inférieur au niveau de la tour auquel est envoyé le gaz appauvri en dioxyde de carbone ;
- l'appareil comprend une unité de réfrigération mécanique pour refroidir l'eau refroidie dans la tour de refroidissement en amont des moyens pour refroidir l'air en amont de l'unité de séparation d'air et/ou avant son envoi à l'unité de séparation du mélange gazeux.

Selon un autre objet de l'invention il est prévu un procédé intégré selon la revendication 7.

Selon d'autres aspects facultatifs :
- on refroidit l'air en amont de l'unité de séparation d'air dans une tour de lavage à l'eau alimentée par de l'eau refroidie dans la tour de refroidissement d'eau ;
- de l'oxygène d'une ou de l'unité de séparation d'air est envoyé à une unité d'oxycombustion et des fumées de l'oxycombustion sont envoyées à l'unité de séparation d'un mélange comme mélange gazeux ;
- on envoie du gaz appauvri en dioxyde de carbone de l'unité de séparation du mélange gazeux dans la tour de refroidissement d'eau ;
- le niveau d'introduction du débit gazeux enrichi en azote est inférieur au niveau de la tour où est envoyé le gaz appauvri en dioxyde de carbone ;
- on refroidit l'eau refroidie dans la tour de refroidissement au moyen d'une unité de réfrigération mécanique, en amont des moyens pour refroidir l'air en amont de l'unité de séparation d'air et en amont de l'unité de séparation du mélange gazeux ;
- on détend le gaz appauvri en dioxyde de carbone dans une vanne jusqu'à une pression inférieure à celle à laquelle on introduit le débit gazeux enrichi en azote dans la tour de refroidissement d'eau ;
- au moins un autre gaz dans le mélange est de l'azote, de l'oxygène, de l'argon, de l'hydrogène, du monoxyde de carbone, du méthane ou de l'NO₂ et le mélange contient au moins 40% mol. de dioxyde de carbone ;
- au moins un autre gaz dans le mélange est choisi dans la liste comprenant l'hydrogène, le monoxyde de carbone ou le méthane et un gaz humidifié sorti en tête de la tour de refroidissement d'eau est utilisé comme carburant, par exemple dans une turbine à gaz ;
- l'unité de séparation du mélange gazeux sépare le mélange par distillation et/ou séparation à phase à température subambiante;
- la pression d'opération de la tour est substantiellement égale à la pression à laquelle l'azote sort de l'appareil de séparation d'air.

Un avantage de la présente invention est qu'il permet l'intégration de production d'eau froide pour des appareils de séparation avec comme seul lien entre les deux appareils une conduite d'eau refroidie, alors qu'une solution selon l'art antérieur a obligatoirement une conduite d'azote sous pression qui relie les deux appareils.

L'invention sera décrite en plus de détail en se référant aux figures.

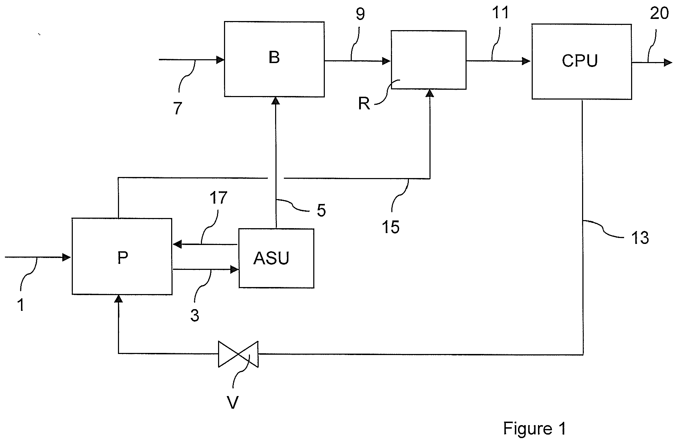

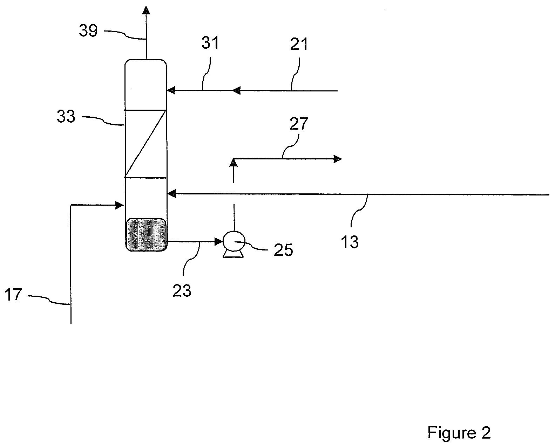

La Figure 1 montre un appareil et un procédé intégré de séparation d'un mélange de dioxyde de carbone et au moins un autre gaz et de séparation d'air par distillation cryogénique selon l'invention. Les Figures 2 à 4 montrent des détails de différentes tours de refroidissement d'eau utilisées pour refroidir l'air en amont de la séparation d'air par distillation dans la Figure 1, selon l'invention.

Dans la Figure 1, un débit d'air 1 est refroidi dans une unité de pré-refroidissement P comprenant une tour de lavage de l'air à l'eau et une tour de refroidissement d'eau à l'azote 17. Ce genre de refroidissement est bien connu de « Industrial Gas Handbook » de F.G.Kerry, page 112. L'air 3 refroidi dans l'unité de pré-refroidissement P est envoyé à un appareil de séparation d'air ASU où il est épuré pour enlever le dioxyde de carbone et l'humidité, refroidi et séparé dans un système de colonnes pour produire de l'oxygène 5 et de l'azote 17. L'oxygène 5 est envoyé à une chaudière d'oxycombustion B également alimentée par du carburant 7. Des fumées 9 provenant de l'unité d'oxycombustion B contiennent au moins 40% mol. de dioxyde de carbone en base sèche, voire au moins 60% mol. de dioxyde de carbone, et au moins un composant choisi dans la liste suivante : de l'azote, de l'oxygène, de l'argon, de l'hydrogène, du monoxyde de carbone, du méthane ou de l'NO₂. Les fumées sont traitées dans une unité de séparation CPU. En amont du CPU, les fumées 9 sont refroidies dans une unité de refroidissement R par échange de chaleur avec de l'eau froide 15. Les fumées 11 sont éventuellement comprimées et ensuite séparées par séparation de phase et/ou distillation dans l'unité CPU à une température subambiante. Ceci permet de produire un débit enrichi en dioxyde de carbone CO₂ sous forme liquide ou gazeuse 20 et un débit gazeux appauvri en dioxyde de carbone 13. Le débit appauvri en dioxyde de carbone 13 peut être un débit d'azote, d'oxygène, d'argon ou de NO₂ ou un mélange d'au moins deux de ces gaz. Le débit 13 sort de l'unité CPU à une température proche de l'ambiante (-10°C à 80°C) et une pression proche de la pression atmosphérique (1 bar a à 2 bars a) et est détendu dans une vanne V à une pression de quelques dizaines à quelques centaines de millimètres de colonne d'eau selon les pertes de charge du système en aval. Le gaz détendu 13 peut être envoyé au pré-refroidissement.

L'azote 17 est envoyé directement de l'appareil de séparation d'air ASU à l'unité de pré-refroidissement P sans passer par un autre moyen de traitement, tel qu'une turbine ou un échangeur autre que l'échangeur de refroidissement d'air associé à l'appareil de séparation d'air ASU.

L'unité de pré-refroidissement produit de l'eau froide qui est envoyée soit à l'unité R comme débit 15 soit utilisée dans l'unité P soit les deux.

La Figure 2 montre un détail de l'unité de pré-refroidissement P.

Cette unité comprend une tour de refroidissement 33 où l'eau 31 rentre en contact direct avec de l'azote 17 provenant de l'appareil de séparation d'air ASU. Le gaz détendu 13 peut être envoyé à la tour à un niveau supérieur au niveau d'entrée de l'azote 17, éventuellement séparé du niveau d'entrée de l'azote par un étage de garnissage. L'azote 17 provient de l'appareil ASU directement et arrive dans la tour 33 sans passer par les éléments R ou CPU.

La tour de refroidissement d'eau 33 est alimentée en haut par un débit d'eau 31 à une température de 4°C à 40°C. La pression du débit 13 est légèrement inférieure à celle du débit 17 à l'entrée dans la tour 33, grâce à la détente dans la vanne V en amont de la tour, pour éviter de polluer l'eau refroidie.

Le gaz 17 et éventuellement le gaz 13 refroidissent l'eau par contact direct et évaporation d'une partie de l'eau dans ces gaz secs et le mélange formé 39 sort en tête de la tour comme mise à l'air. L'eau réchauffée dans l'unité CPU peut être renvoyée à l'unité P via l'alimentation 21.

L'eau refroidie 23 en cuve de la tour 33 est pompée par une pompe 25 pour être envoyée à la tour de refroidissement d'air à l'eau par la conduite 27. Sinon l'eau refroidie peut être envoyée à un échangeur à contact indirect pour transférer des frigories vers l'air destiné à la distillation. Une partie de cette eau 27 peut aussi servir à fournir des frigories à l'unité CPU, par exemple en amont de l'unité de dessiccation.

Ce procédé n'utilise éventuellement pas d'unité de réfrigération mécanique telle qu'un groupe frigorifique. La tour 33 sera éventuellement un peu plus grande que celle utilisée uniquement pour fournir de l'eau pour l'unité de séparation d'air ASU.

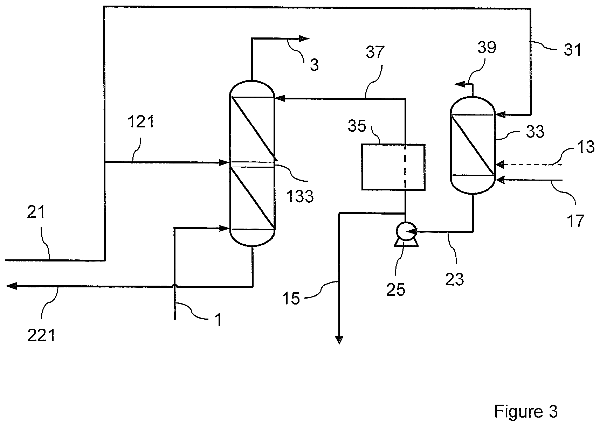

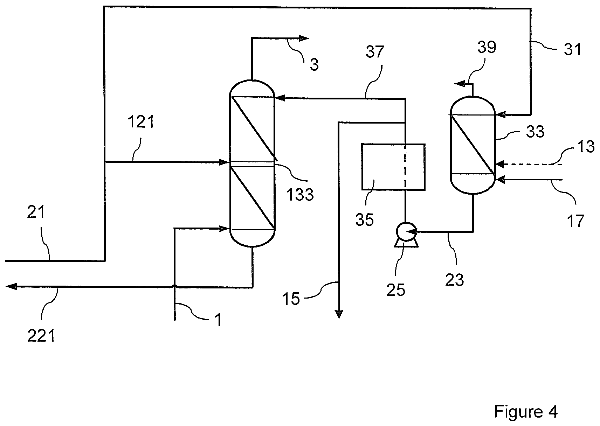

Pour les procédés des Figures 3 et 4, un groupe frigorifique 35 est utilisé.

De cette manière, au lieu d'avoir un groupe frigorifique pour chacune des unités, un seul groupe frigorifique peut refroidir l'unité de séparation d'air ASU et l'unité de séparation du mélange contenant du dioxyde de carbone CPU.

La Figure 3 montre un détail de l'unité de pré-refroidissement P.

Cette unité P comprend une tour de refroidissement 33 où l'eau 31 rentre en contact direct avec de l'azote 17 provenant de l'appareil de séparation d'air ASU et une tour de refroidissement d'air à l'eau 133. Le gaz détendu 13 est éventuellement envoyé à la tour 33 à un niveau supérieur au niveau d'entrée de l'azote 17. L'azote 17 provient de l'appareil ASU directement et arrive dans la tour 33 sans passer par les éléments R ou CPU.

La tour de refroidissement d'eau 33 est alimentée en haut par un débit d'eau 31 à une température de 10°C à 50°C.

La pression du débit 13 est légèrement inférieure à celle du débit 17 à l'entrée dans la tour 33, grâce à la détente dans la vanne V en amont de la tour. La pression d'opération de la tour 33 est substantiellement égale à la pression à laquelle l'azote 17 sort de l'appareil de séparation d'air ASU.

Le gaz 17 et éventuellement le gaz 13 refroidissent l'eau par contact direct et évaporation et le mélange formé 39 sort en tête de la tour comme mise à l'air.

L'eau refroidie 23 en cuve de la tour 33 est pompée par une pompe 25 pour être envoyée à la tête de la tour de refroidissement d'air à l'eau 133 comme débit 37. L'air 1 destiné à la distillation est refroidi en étant envoyé en cuve de la tour 133. L'eau de refroidissement 21 est envoyée à un niveau intermédiaire de la tour 133 comme débit 121 et en tête de la tour 33 comme débit 31. L'eau refroidit l'air en produisant, en tête de la tour 133, un débit d'air refroidi 3 qui est envoyé à l'épuration et ensuite à la distillation dans l'unité de séparation d'air ASU.

L'eau réchauffée 221 est recueillie en cuve de la tour 133 et est recyclée à la tour 133 après une réfrigération extérieure (en utilisant des aéro-réfrigérants, par échange contre de l'eau froide, etc.). On peut aussi envisager que l'eau 221 n'est pas recyclée mais retourne, par exemple, dans une rivière ou un réseau d'eau en aval.

L'eau refroidie 23 recueillie en cuve de la tour 33 est pressurisée par la pompe 25 et une partie 15 est envoyée à l'unité de séparation CPU. Le reste de l'eau est refroidie par un groupe frigorifique 35 pour constituer le débit 37 envoyé en tête de la tour 133.

La Figure 4 diffère de la Figure 3 uniquement en ce que toute l'eau provenant de la pompe 25 est refroidie dans le groupe frigorifique avant d'être divisée en deux. Le débit 37 refroidi est envoyé en tête de la tour 133 et le débit refroidi 15 est envoyé à l'unité CPU.

L'eau refroidie 15 envoyée au CPU peut servir à refroidir le mélange à séparer ou à refroidir un produit de la séparation. L'unité CPU ne fonctionne pas forcément à température subambiante. L'eau réchauffée dans l'unité CPU peut être renvoyée à l'unité P via l'alimentation 21.

L'appareil de séparation d'air ASU n'alimente pas obligatoirement une unité d'oxycombustion, si présente, en oxygène. Il suffit que l'appareil de séparation d'air ASU se trouve relativement près de l'unité CPU pour permettre l'intégration entre les deux.

Pour le cas dans lequel le gaz appauvri en dioxyde de carbone comprend du monoxyde de carbone et/ou du méthane et/ou de l'hydrogène, le gaz peut être envoyé dans la tour de refroidissement et le gaz humidifié formé en tête de la tour peut être utilisé comme carburant, par exemple dans une turbine à gaz.

## Revendications

1. Appareil intégré de séparation d'un mélange de dioxyde de carbone et au moins un autre gaz et de séparation d'air par distillation d'air comprenant une unité de séparation (CPU) d'un mélange gazeux comprenant du dioxyde de carbone et au moins un autre gaz pour produire un gaz enrichi en dioxyde de carbone et un gaz appauvri en dioxyde de carbone et une unité de séparation d'air (ASU) par distillation cryogénique pour produire au moins un débit gazeux enrichi en azote (17), une tour (33) de refroidissement d'eau par contact direct ainsi qu'une conduite (31) pour envoyer de l'eau en tête de la tour, une conduite pour envoyer au moins une partie du débit gazeux enrichi en azote à un niveau inférieur de la tour, une conduite d'eau refroidie (15, 23, 27, 37) pour soutirer de l'eau refroidie de la tour et des moyens pour refroidir l'air en amont de l'unité de séparation d'air, la conduite d'eau refroidie étant reliée à l'entrée et/ou à la sortie de l'unité de séparation du mélange gazeux **caractérisé en ce que** la conduite d'eau refroidie est reliée aux moyens (133) pour refroidir l'air en amont de l'unité de séparation d'air et **en ce que** la conduite pour envoyer au moins une partie du débit gazeux enrichi en azote de l'unité de séparation d'air est reliée au niveau inférieur de la tour de refroidissement sans passer par une turbine ou un échangeur destiné à refroidir le mélange gazeux.

2. Appareil selon la revendication 1, dans lequel les moyens pour refroidir l'air en amont de l'unité de séparation d'air sont constitués par une tour de lavage à l'eau (133) et éventuellement par une conduite pour envoyer de l'eau réchauffée de la tour de lavage à la tour de refroidissement d'eau.

3. Appareil selon la revendication 1 ou 2, dans lequel la conduite d'eau refroidie (27, 23, 15) est adaptée pour envoyer de l'eau refroidie de la tour de refroidissement (33) à l'unité de séparation du mélange (CPU) pour fournir des frigories au mélange gazeux à séparer (11) ou à un produit de la séparation (20).

4. Appareil intégré comprenant un appareil selon la revendication 1, 2 ou 3, comprenant une unité d'oxycombustion (B), une conduite pour envoyer de l'oxygène (5) d'une ou de l' unité de séparation d'air (ASU) à l'unité d'oxycombustion et une conduite pour envoyer des fumées (9, 11) de l'oxycombustion à l'unité de séparation d'un mélange (CPU) comme mélange gazeux.

5. Appareil selon l'une des revendications précédentes, comprenant une conduite pour envoyer le gaz appauvri en dioxyde de carbone (13) à la tour (33) de refroidissement d'eau et dans lequel éventuellement le niveau d'introduction du débit gazeux enrichi en azote (17) est inférieur au niveau de la tour où est envoyé le gaz appauvri en dioxyde de carbone.

6. Appareil selon l'une des revendications précédentes, comprenant une unité de réfrigération mécanique (35) pour refroidir l'eau refroidie dans la tour de refroidissement en amont des moyens (133) pour refroidir l'air en amont de l'unité de séparation d'air et/ou avant son envoi à l'unité de séparation du mélange gazeux (CPU).

7. Procédé intégré de séparation d'un mélange de dioxyde de carbone et au moins un autre gaz et de séparation d'air par distillation d'air, comprenant une unité de séparation (CPU) d'un mélange gazeux (11) comprenant du dioxyde de carbone et au moins un autre gaz pour produire un gaz enrichi en dioxyde de carbone (20) et un gaz appauvri en dioxyde de carbone (13) et une unité de séparation d'air par distillation cryogénique (ASU) pour produire au moins un débit gazeux enrichi en azote (17) dans lequel on refroidit de l'eau dans une tour (33) de refroidissement d'eau par contact direct avec le débit gazeux enrichi en azote, et on refroidit le mélange gazeux (11) destiné à l'unité de séparation du mélange gazeux et/ou un produit de l'unité de séparation du mélange gazeux (13, 20) au moyen de l'eau refroidie (15, 23, 27) provenant de la tour de refroidissement **caractérisé en ce que** on refroidit l'air destiné à l'unité de séparation d'air avec l'eau refroidie dans la tour de refroidissement et **en ce que** le débit enrichi en azote est envoyé de l'appareil de séparation d'air à la tour de refroidissement sans avoir été détendu et sans avoir été réchauffé dans un échangeur de refroidissement du mélange gazeux .

8. Procédé selon la revendication 7, dans lequel on refroidit l'air en amont de l'unité de séparation d'air dans une tour (133) de lavage à l'eau alimentée par de l'eau (37) refroidie dans la tour (33) de refroidissement d'eau.

9. Procédé intégré comprenant un procédé selon la revendication 7 ou 8, dans lequel de l'oxygène (5) d'une ou de l'unité de séparation d'air est envoyé à une unité d'oxycombustion (B) et des fumées (9, 11) de l'oxycombustion sont envoyées à l'unité de séparation d'un mélange comme mélange gazeux.

10. Procédé selon l'une des revendications 7 à 9, dans lequel on envoie du gaz appauvri en dioxyde de carbone (13) de l'unité de séparation du mélange gazeux dans la tour de refroidissement d'eau (33) dans laquelle éventuellement le niveau d'introduction du débit gazeux enrichi en azote est inférieur au niveau de la tour où est envoyé le gaz appauvri en dioxyde de carbone.

11. Procédé selon l'une des revendications 7 à 10, dans lequel on refroidit l'eau refroidie dans la tour de refroidissement au moyen d'une unité de réfrigération mécanique (35) avant de l'envoyer aux moyens pour refroidir l'air en amont de l'unité de séparation d'air (133) et/ou avant de l'envoyer à l'unité de séparation du mélange gazeux.

12. Procédé selon l'une des revendications 7 à 11, dans lequel on détend le gaz appauvri en dioxyde de carbone dans une vanne (V) jusqu'à une pression inférieure à celle à laquelle on introduit le débit gazeux enrichi en azote dans la tour de refroidissement d'eau (33).

13. Procédé selon l'une des revendications 7 à 12, dans lequel au moins un autre gaz dans le mélange (11) est choisi dans la liste comprenant de l'azote, de l'oxygène, de l'argon, de l'hydrogène, du monoxyde de carbone, du méthane ou de l'NO₂ et le mélange contient au moins 40% mol. de dioxyde de carbone.

14. Procédé selon les revendications 10 et 13, dans lequel au moins un autre gaz (11) comprend l'hydrogène, le monoxyde de carbone ou le méthane et un gaz humidifié (39) sorti en tête de la tour de refroidissement d'eau est utilisé comme carburant, par exemple dans une turbine à gaz.

## Patentansprüche

1. Integrierte Einrichtung zum Abscheiden eines Gemischs aus Kohlendioxid und mindestens einem anderen Gas und zum Abscheiden von Luft durch Luftdestillation, umfassend eine Abscheideeinheit (CPU) eines Gasgemischs, das Kohlendioxid und mindestens ein anderes Gas umfasst, um ein kohlendioxidangereichertes Gas und ein kohlendioxidabgereichertes Gas zu erzeugen, und eine Luftabscheideeinheit (ASU) durch kryogene Destillation, um mindestens einen stickstoffangereicherten, gasförmigen Volumenstrom (17) zu erzeugen, einen Wasserkühlturm (33) durch direkten Kontakt sowie eine Leitung (31), um Wasser in den Kopf des Turms zu befördern, eine Leitung, um mindestens einen Teil des stickstoffangereicherten, gasförmigen Volumenstroms auf eine untere Ebene des Turms zu befördern, eine Leitung mit gekühltem Wasser (15, 23, 27, 37), um gekühltes Wasser von dem Turm zu entnehmen, und Mittel zum Kühlen von Luft stromaufwärts von der Luftabscheideeinheit, wobei die Leitung mit gekühltem Wasser mit dem Eingang und/oder mit dem Ausgang der Abscheideeinheit des Gasgemischs verbunden ist, **dadurch gekennzeichnet, dass** die Leitung mit gekühltem Wasser mit den Mitteln (133) zum Kühlen von Luft stromaufwärts von der Luftabscheideeinheit verbunden ist und dadurch, dass die Leitung, um mindestens einen Teil des stickstoffangereicherten, gasförmigen Volumenstroms der Luftabscheideeinheit zu befördern, mit der unteren Ebene des Kühlturms verbunden ist, ohne durch eine Turbine oder einen Tauscher zu laufen, der dazu bestimmt ist, das Gasgemisch zu kühlen.

2. Einrichtung nach Anspruch 1, wobei die Mittel zum Kühlen von Luft stromaufwärts von der Luftabscheideeinheit von einem Wasserwaschturm (133) und eventuell von einer Leitung gebildet werden, um erhitztes Wasser von dem Waschturm zu dem Wasserkühlturm zu befördern.

3. Einrichtung nach Anspruch 1 oder 2, wobei die Leitung mit gekühltem Wasser (27, 23, 15) angepasst ist, um gekühltes Wasser von dem Kühlturm (33) zu der Abscheideeinheit des Gemischs (CPU) zu befördern, um dem abzuscheidenden Gasgemisch (11) oder einem Abscheideprodukt (20) Frigorien zuzuführen.

4. Integrierte Einrichtung, umfassend eine Einrichtung nach Anspruch 1, 2 oder 3, umfassend eine Sauerstoffverbrennungseinheit (B), eine Leitung, um Sauerstoff (5) von einer oder der Luftabscheideeinheit (ASU) zu der Sauerstoffverbrennungseinheit zu befördern, und eine Leitung, um Rauch (9, 11) von der Sauerstoffverbrennungseinheit zu der Abscheideeinheit eines Gemischs (CPU) als Gasgemisch zu befördern.

5. Einrichtung nach einem der vorstehenden Ansprüche, umfassend eine Leitung, um das kohlendioxidabgereicherte Gas (13) zu dem Wasserkühlturm (33) zu befördern, und wobei eventuell die Einleitebene des stickstoffangereicherten, gasförmigen Volumenstroms (17) niedriger ist als die Ebene des Turms, wohin das kohlendioxidabgereicherte Gas befördert wird.

6. Einrichtung nach einem der vorstehenden Ansprüche, umfassend eine mechanische Kühleinheit (35), um das Wasser zu kühlen, das in dem Kühlturm stromaufwärts von den Mitteln (133) zum Kühlen von Luft stromaufwärts von der Luftabscheideeinheit und/oder vor dessen Beförderung zu der Abscheideeinheit des Gasgemischs (CPU) gekühlt wird.

7. Integriertes Verfahren zum Abscheiden eines Gemischs aus Kohlendioxid und mindestens eines anderen Gases und zum Abscheiden von Luft durch Luftdestillation, umfassend eine Abscheideeinheit (CPU) eines Gasgemischs (11), das Kohlendioxid und mindestens ein anderes Gas umfasst, um ein kohlendioxidangereichertes Gas (20) und ein kohlendioxidabgereichertes Gas (13) zu erzeugen, und eine Luftabscheideeinheit durch kryogene Destillation (ASU), um mindestens einen stickstoffangereicherten, gasförmigen Volumenstrom (17) zu erzeugen, wobei Wasser in einem Wasserkühlturm (33) durch direkten Kontakt mit dem stickstoffangereicherten, gasförmigen Volumenstrom gekühlt wird, und das Gasgemisch (11), das für die Abscheideeinheit des Gasgemischs bestimmt ist, und/oder ein Produkt der Abscheideeinheit des Gasgemischs (13, 20) mittels gekühlten Wassers (15, 23, 27), das aus dem Kühlturm stammt, gekühlt wird, **dadurch gekennzeichnet, dass** die Luft, die für die Luftabscheideeinheit bestimmt ist, mit dem in dem Kühlturm gekühlten Wasser gekühlt wird, und dadurch, dass der stickstoffangereicherte Volumenstrom von der Luftabscheideeinrichtung zu dem Kühlturm befördert wird, ohne druckentlastet worden zu sein und ohne in einem Kühltauscher des Gasgemischs erhitzt worden zu sein.

8. Verfahren nach Anspruch 7, wobei die Luft stromaufwärts von der Luftabscheideeinheit in einem Wasserwaschturm (133) gekühlt wird, der von Wasser (37) gespeist wird, das in dem Wasserkühlturm (33) gekühlt wird.

9. Integriertes Verfahren, umfassend ein Verfahren nach Anspruch 7 oder 8, wobei Sauerstoff (5) von einer oder von der Luftabscheideeinheit zu einer Sauerstoffverbrennungseinheit (B) befördert wird und Rauch (9, 11) von der Sauerstoffverbrennung zu der Abscheideeinheit eines Gemischs als Gasgemisch befördert wird.

10. Verfahren nach einem der Ansprüche 7 bis 9, wobei kohlendioxidabgereichertes Gas (13) von der Abscheideeinheit des Gasgemischs in den Wasserkühlturm (33) befördert wird, in dem eventuell die Einleitebene des stickstoffangereicherten, gasförmigen Volumenstroms niedriger ist als die Ebene des Turms, wohin das kohlendioxidabgereicherte Gas befördert wird.

11. Verfahren nach einem der Ansprüche 7 bis 10, wobei das in dem Kühlturm gekühlte Wasser mittels einer mechanischen Kühleinheit (35) gekühlt wird, bevor es zu den Mitteln zum Kühlen der Luft stromaufwärts von der Luftabscheideeinheit (133) befördert wird und/oder bevor es zu der Abscheideeinheit des Gasgemischs befördert wird.

12. Verfahren nach einem der Ansprüche 7 bis 11, wobei das kohlendioxidabgereicherte Gas in einem Ventil (V) bis auf einen Druck druckentlastet wird, der niedriger ist als jener, mit dem der stickstoffangereicherte, gasförmige Volumenstrom in den Wasserkühlturm (33) eingeleitet wird.

13. Verfahren nach einem der Ansprüche 7 bis 12, wobei mindestens ein anderes Gas in dem Gemisch (11) in der Liste gewählt wird, umfassend Stickstoff, Sauerstoff, Argon, Wasserstoff, Kohlenmonoxid, Methan oder NO₂, und das Gemisch mindestens 40 Mol-% an Kohlendioxid enthält.

14. Verfahren nach den Ansprüchen 10 und 13, wobei mindestens ein anderes Gas (11) Wasserstoff, Kohlenmonoxid oder Methan umfasst und ein angefeuchtetes Gas (39), das am Kopf des Wasserkühlturms austritt, als Treibstoff verwendet wird, zum Beispiel in einer Gasturbine.

## Claims

1. Integrated device for separating a mixture of carbon dioxide and at least one other gas and separation of air by distillation of air comprising a unit for separating (CPU) a gaseous mixture comprising carbon dioxide and at least one other gas for producing a gas enriched with carbon dioxide and a carbon dioxide-depleted gas and an air separation unit (ASU) by cryogenic distillation for producing at least one gaseous flow enriched with nitrogen (17), a water cooling tower (33) by direct contact as well as a pipe (31) for sending water to the top of the tower, a pipe for sending at least some of the gaseous flow enriched with nitrogen at a lower level of the tower, a cooled water pipe (15, 23, 27, 37) for drawing the cooled water from the tower and means for cooling the air upstream from the air separation unit, the cooled water pipe being connected to the inlet and/or to the outlet of the unit for separating the gaseous mixture, **characterised in that** the cooled water pipe is connected to the means (133) for cooling the air upstream from the air separation unit and **in that** the pipe for sending at least some of the gaseous flow enriched with nitrogen from the air separation unit is connected to the lower level of the cooling tower without passing through a turbine or an exchanger intended for cooling the gaseous mixture.

2. Device according to claim 1, wherein the means for cooling the air upstream from the air separation unit are constituted by a tower for washing with water (133) and possibly by a pipe for sending the heated water from the washing tower to the water cooling tower.

3. Device according to claim 1 or 2, wherein the cooled water pipe (27, 23, 15) is adapted for sending the cooled water from the cooling tower (33) to the unit for separating the mixture (CPU) for supplying cold water to the gaseous mixture to be separated (11) or to a product from the separation (20).

4. Integrated device comprising a device according to claim 1, 2 or 3, comprising an oxycombustion unit (B), a pipe for sending oxygen (5) from a or the air separation unit (ASU) to the oxycombustion unit and a pipe for sending fumes (9, 11) from the oxycombustion to the unit for separating a mixture (CPU) as a gaseous mixture.

5. Device according to one of the preceding claims, comprising a pipe for sending the carbon dioxide-depleted gas (13) to the water cooling tower (33), and wherein possibly the introduction level of the gaseous flow enriched with nitrogen (17) is less than the level of the tower where the carbon dioxide-depleted gas is sent.

6. Device according to one of the preceding claims, comprising a mechanical refrigeration unit (35) for cooling the cooled water in the cooling tower upstream from the means (133) for cooling the air upstream from the air separation unit and/or before it being sent to the unit for separating the gaseous mixture (CPU).

7. Integrated method for separating a mixture of carbon dioxide and at least one other gas and separation of air by distillation of air, comprising a unit for separating (CPU) a gaseous mixture (11) comprising carbon dioxide and at least one other gas for producing a gas enriched with carbon dioxide (20) and a carbon dioxide-depleted gas (13) and a unit for separation air by cryogenic distillation (ASU) for producing at least one gaseous flow enriched with nitrogen (17), wherein water is cooled in a water cooling tower (33) by direct contact with the gaseous flow enriched with nitrogen, and the gaseous mixture (11) intended for the unit for separating the gaseous mixture and/or a product of the unit for separating the gaseous mixture (13, 20) is cooled by means of the cooled water (15, 23, 27) coming from the cooling tower, **characterised in that** the air intended for the air separation unit is cooled with the cooled water in the cooling tower and **in that** the flow enriched with nitrogen is sent from the air separation device to the cooling tower without having been expanded and without having been heated in an exchanger for cooling the gaseous mixture.

8. Method according to claim 7, wherein the air is cooled upstream from the air separation unit in a tower (133) for washing with water supplied by water (37) cooled in the water cooling tower (33).

9. Integrated method comprising a method according to claim 7 or 8, wherein oxygen (5) from a or the air separation unit is sent to an oxycombustion unit (B) and fumes (9, 11) from the oxycombustion are sent to the unit for separating a mixture as a gaseous mixture.

10. Method according to one of claims 7 to 9, wherein the carbon dioxide-depleted gas (13) is sent from the unit for separating the gaseous mixture in the water cooling tower (33), wherein possibly the introduction level of the gaseous flow enriched with nitrogen is less than the level of the tower where the carbon dioxide-depleted gas is sent.

11. Method according to one of claims 7 to 10, wherein the water cooled in the cooling tower is cooled by means of a mechanical refrigeration unit (35) before sending it to the means for cooling the air upstream from the air separation unit (133) and/or before sending it to the unit for separating the gaseous mixture.

12. Method according to one of claims 7 to 11, wherein the carbon dioxide-depleted gas is expanded in a valve (V) up to a pressure less than that at which the gaseous flow enriched with nitrogen is introduced in the water cooling tower (33).

13. Method according to one of claims 7 to 12, wherein at least one other gas in the mixture (11) is selected from the list comprising nitrogen, oxygen, argon, hydrogen, carbon monoxide, methane or NO₂ and the mixture contains at least 40% mol. of carbon dioxide.

14. Method according to claims 10 and 13, wherein at least one other gas (11) comprises hydrogen, carbon monoxide or methane and a humidified gas (39) exiting from the top of the water cooling tower is used as a fuel, for example in a gas turbine.
